# EUROPEAN PATENT APPLICATION

(11) **EP 2 219 338 A1**
(43) Date of publication of application: **18.08.2010**
(21) Application number: 08860810.4
(22) Date of filing: 28.11.2008
(51) Int. Cl.: H04L 29/06

(54) **A METHOD AND EQUIPMENT FOR UPLOADING THE REAL-TIME MEDIA CONTENT**

(30) Priority: 07.12.2007 CN 200710124931
(71) Applicant: Huawei Technologies Co., Ltd., Longgang District, Shenzhen Guangdong 518129 (CN)
(72) Inventor: ZHANG, Dewen, Guangdong 518129 (CN); SHI, Youzhu, Guangdong 518129 (CN); ZHANG, Ni, Guangdong 518129 (CN); MAO, Lingzhi, Guangdong 518129 (CN)
(74) Representative: Epping, Wilhelm
(86) International application number: PCT/CN2008/073231
(87) International publication number: WO 2009/074070

(57) **Abstract**

A method for uploading real-time media content in an IMS network is provided. The method includes the following steps. A content transmitting unit receives a content upload request message carrying content upload request message indication information. The content transmitting unit establishes a content upload session with a service control unit according to the received content upload request message, and transmits the real-time media content, in which the content transmitting unit is a terminal of the IMS network, and the service control unit is an application server or a call session control function. After receiving the content upload request message, the content transmitting unit establishes the content upload session according to the content upload request message indication in the received content upload request message, and performs real-time media content uploading, thereby uploading the real-time media content, such that the IMS network provides services such as video monitoring and content sharing in which a user provides the real-time media content.

## Description

### FIELD OF THE TECHNOLOGY

The present invention relates to the field of communication technology, and more particularly to a method and a device for uploading real-time media content in an Internet Protocol (IP) multimedia subsystem (IMS) network.

### BACKGROUND OF THE INVENTION

The IP multimedia subsystem (IMS) is defined by the 3rd Generation Partnership Project (3GPP) standard, which is a target network for a 3rd Generation (3G) mobile network to implement packet voice and packet data service and to provide uniform multimedia services and applications.

An IP packet domain is employed in the IMS as a bearer channel for control signaling and media transmission, and the Session Initiation Protocol (SIP) is employed as call control signaling, so as to separate service management, session control and bearer access.

The SIP is an application-layer control protocol that can establish, modify, and terminate multimedia sessions or calls, in which the multimedia sessions include multimedia conferences, tele-education, and Internet telephony, and the core of the SIP is defined by the Internet Engineering Task Force (IETF).

Other international standard organizations, for example, the International Telecommunication Union-Telecommunication Standardization Sector (ITU-T) and the European Telecommunications Standards Institute (ETSI) also use the IMS as the core network of the next generation network according to their definitions.

In a real-time media content upload service, a terminal uploads real-time media content to a network or another user for reception, such that the user may view the media content in real time or in an offline mode. For example, the video monitoring service is a real-time media content upload service. Currently, similar applications occur in a Web network, but the Web mechanism cannot ensure the quality of service (QoS) of the service, and a solution for implementing the real-time media content upload service is not available in the existing IMS network.

### SUMMARY OF THE INVENTION

Accordingly, the present invention is directed to a method and a device for uploading real-time media content in an IMS network, so as to implement a real-time media content upload service in the IMS network.

In an embodiment, the present invention provides a method for uploading real-time media content in an IMS network, which includes the following steps.

A content transmitting unit receives a content upload request message, in which the content upload request message carries content upload request message indication information.

The content transmitting unit establishes a content upload session with a service control unit according to the received content upload request message, establishes a media channel with a content receiving unit, and transmits the real-time media content through the media channel, in which the content transmitting unit is a terminal of the IMS network, the content receiving unit is a terminal of the IMS network or a media function (MF), and the service control unit is a call session control function (CSCF) or an application server (AS).

Further, the content upload request message further carries content transmitting party control information, which includes at least one of: controlling a device of the content transmitting unit to start a camera, controlling a position of the camera, controlling the device of the content transmitting unit to automatically give an answer, and a starting condition of the content transmitting unit.

Further, after receiving the content upload request message, the content transmitting unit authenticates the content upload request message, and an authentication mode includes at least one of:
mode 1: authenticating a content requesting party identifier;
mode 2: authenticating validity of the content upload request message; and
mode 3: authenticating whether the content upload request message is authenticated by the network.

In an embodiment, the present invention further provides a device for transmitting real-time media content in an IMS network, which includes a content upload request message receiving module, a content upload session establishing module, a media channel establishing module, and a real-time media content transmitting module.

The content upload request message receiving module is adapted to receive a content upload request message, in which the content upload request message carries content upload request message indication information.

The content upload session establishing module is adapted to establish a content upload session with a service control unit according to the content upload request message received by the content upload request message receiving module.

The media channel establishing module is adapted to establish a media channel with a media content receiving party.

The real-time media content transmitting module is adapted to transmit the real-time media content through the established media channel.

In an embodiment, the present invention further provides a device for controlling a real-time media content upload service in an IMS network, which includes a content upload request message receiving processing module, a content upload session establishing processing module, and a media channel establishing processing module.

The content upload request message receiving processing module is adapted to receive a content upload request message, in which the content upload request message carries content upload request message indication information.

The content upload session establishing processing module is adapted to establish a content upload session with a real-time media content transmitting party according to the content upload request message received by the content upload request message receiving processing module, in which the content transmitting party is a terminal of the IMS network.

The media channel establishing processing module is adapted to control the real-time media content transmitting party to establish a media channel with a media content receiving party.

In the embodiments of the present invention, after receiving the content upload request message, the content transmitting unit establishes the content upload session according to the content upload request message indication in the received content upload request message, and performs the real-time media content uploading, thereby uploading the real-time media content, such that the IMS network provides services such as video monitoring and content sharing in which a user provides the real-time media content.

Further, if the content upload request message carries the content transmitting party control information, the content transmitting unit controls the device of the content transmitting unit to start the camera, controls the position of the camera, controls the device to automatically give an answer, and controls the starting condition according to the content transmitting party control information, such that the content transmitting unit may be remotely started and automatically controlled to upload the real-time media content.

Further, the content transmitting unit can authenticate the received content upload request message, and the content transmitting unit processes the real-time media content uploading only after the content upload request message passes the authentication, thereby improving the security of services.

### BRIEF DESCRIPTION OF THE DRAWINGS

FIG. 1 is a structural view of a system for uploading real-time media content according to an embodiment of the present invention;
FIG. 2 is a flow chart of a method for uploading real-time media content according to an embodiment of the present invention;
FIG. 3 is a flow chart of a method for uploading real-time media content according to another embodiment of the present invention;
FIG. 4 is a flow chart of a method for uploading real-time media content according to another embodiment of the present invention;
FIG. 5 is a flow chart of a method for uploading real-time media content according to another embodiment of the present invention;
FIG. 6 is a flow chart of a method for uploading real-time media content according to another embodiment of the present invention; and
FIG. 7 is a flow chart of a method for uploading real-time media content according to another embodiment of the present invention.

### DETAILED DESCRIPTION OF THE EMBODIMENTS

The technical solutions of the present invention are further described in detail below with reference to the embodiments and the accompanying drawings.

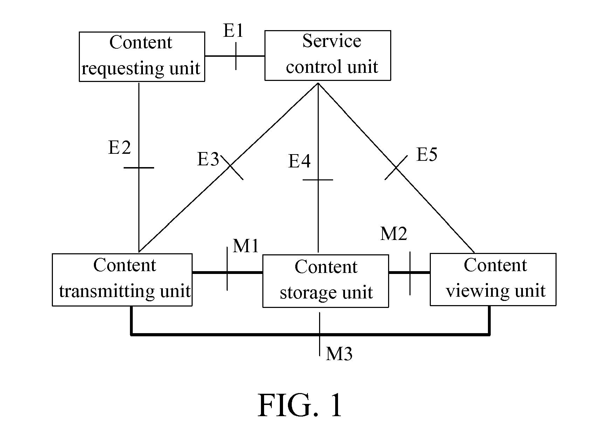

FIG. 1 is a structural view of a system for uploading real-time media content according to an embodiment of the present invention. Referring to FIG. 1, the system includes a content requesting unit, a content transmitting unit, a content storage unit, a content viewing unit, and a service control unit.

1) The content requesting unit is adapted to initiate a content upload request message, so as to request the content transmitting unit to transmit the real-time media content.

In an IMS network, the content requesting unit may be a terminal of the IMS network, and is located in a user equipment (UE). The content requesting unit and the content transmitting unit, may be located in the same physical entity or different physical entities; and the content requesting unit and the content viewing unit may also be located in the same physical entity or different physical entities. The content requesting unit may also be an AS, and at this time, the content requesting unit is located in the same physical entity with the service control unit.

The content requesting unit may also be located in a sensor, for example, a fire alarm sensor, and an intrusion detection device of an anti-theft system.

An E 1 interface between the content requesting unit and the service control unit may be a direct interface or an indirect interface, for example, through an IMS Core.

The interface protocol of the E1 interface between the content requesting unit and the service control unit includes but is not limited to the SIP protocol, the Hypertext Transfer Protocol (HTTP) protocol, and other standard protocols or private protocols.

An E2 interface between the content requesting unit and the content transmitting unit may be a direct interface or an indirect interface, for example, through the IMS Core.

The interface protocol of the E2 interface between the content requesting unit and the content transmitting unit includes but is not limited to the SIP protocol, the HTTP protocol, and other standard protocols or private protocols.

2) The service control unit is adapted to process logic control and communication message routing of the content upload service, for example, authenticate and verify the content upload request message and other messages, indicate the content storage unit to store and/or forward the content, and perform message interaction with the content transmitting unit, the content viewing unit, the content storage unit, and the content requesting unit.

In the IMS network, the service control unit may be an AS and/or a CSCF.

3) The content transmitting unit is adapted to transmit the real-time media content.

In the IMS network, the content transmitting unit may be located in an IMS terminal, for example, a UE or a video monitoring terminal of the IMS network. Any IMS terminal having a real-time media recording capability may serve as the content transmitting unit.

An E3 interface between the content transmitting unit and the service control unit may be a direct interface or an indirect interface, for example, through the IMS Core.

The interface protocol of the E3 interface between the content transmitting unit and the service control unit includes but is not limited to the SIP protocol.

An M1 interface between the content transmitting unit and the content storage unit and an M3 interface between the content transmitting unit and the content viewing unit are media stream interfaces, and include but are not limited to the RTP, RTCP, or RTSP protocol.

4) The content storage unit is adapted to store the media content, and is further adapted to forward the media content.

In the IMS network, the content storage unit may be an MF.

An E4 interface between the content storage unit and the service control unit is a direct interface or an indirect interface, for example, through the IMS Core, and the interface protocol includes but is not limited to the SIP, the H.248, and other standard protocols or private protocols.

An M2 interface between the content storage unit and the content viewing unit is a media stream interface, and the interface protocol includes but is not limited to the RTP, RTCP, or RTSP protocol.

5) The content viewing unit is adapted to receive and play the media content.

In the IMS network, the content viewing unit may be located in the UE.

An E5 interface between the content viewing unit and the service control unit may be a direct interface or an indirect interface, for example, through the IMS Core.

The interface protocol of the E5 interface between the content viewing unit and the service control unit includes but is not limited to the SIP protocol.

The method for uploading real-time media content according to an embodiment of the present invention includes the following steps.

Step 1: A content requesting unit initiates a content upload request message.

Under the control of a certain policy, for example, when a sensor is triggered or a timer expires, or under the control of a manual operation, the content requesting unit initiates the content upload request message.

In this step, the content upload request message is transmitted through an E1 or an E2 interface, and may be an HTTP message, or an SIP message, for example, an SIP INVITE message or an SIP REFER message.

The content upload request message may carry request initiating party information, for example, request initiating party identifier information. For example, the content upload request message is the SIP message, and the request initiating party identifier information is a calling identifier in the message.

The content upload request message may carry content transmitting party information, for example, content transmitting party identifier information. For example, the content upload request message is the SIP message, and the content transmitting party identifier information is a called identifier in the message.

The content upload request message may carry content upload request message indication information, adapted to instruct a request content transmitting unit to upload the content. Preferably, the content upload request message indication information may further describe a request type, including a play request type adapted to instruct to play the uploaded content, or a storage request type adapted to instruct to store the uploaded content, or a play and storage request type adapted to instruct to play and store the uploaded content. For example, the content upload request message is the SIP message, and the content upload request message indication information may be a request-URI, a header, or a Session Description Protocol (SDP) body. When the request type includes the storage request type, the content upload request message indication information further carries storage information, for example a storage path, a storage format, and a file identifier. When the request type includes the play request type, the content upload request message indication information further carries play information, for example, a play mode, which may be multicast, or playing to limited parties.

Further, the content upload request message carries content receiving party information, which includes content viewing party identifier information, and/or content storage party identifier information. The content upload request message may carry more than one piece of content viewing party identifier information, and more than one piece of content storage party identifier information. For example, the content upload request message is the SIP message, and the content receiving party information may be located in a header (for example, a Refer-To header) or a message body.

Further, the content upload request message may further carry content transmitting party control information, including but not limited to at least one of: controlling a device of the content transmitting unit to start a camera, controlling a position of the camera, controlling the device of the content transmitting unit to automatically give an answer, and a starting condition (for example, time) of the content transmitting unit.

In addition, when the content transmitting unit uploads the real-time media content, the content requesting unit may transmit the content upload request message again, for example, so as to alter the request type indication information, set the play manner, set the storage information, set the content receiving party information, or set the content transmitting party control information.

Step 2: The content transmitting unit receives the content upload request message, transmits a content upload request message response, and establishes a content upload session with a service control unit according to the received content upload request message.

The content transmitting unit may receive the content upload request message in the following two modes.

Mode 1: The content requesting unit transmits the content upload request message to the content transmitting unit through the E2 interface.

Mode 2: The content requesting unit transmits the content upload request message to the service control unit through the E1 interface, and the service control unit transmits the content upload request message to the content transmitting unit through an E3 interface.

In Mode 2, contents of the content upload request message transmitted on the E1 interface and the content upload request message transmitted on the E3 interface may be different, for example, the content upload request message transmitted on the E1 interface is the HTTP message, and is converted to the SIP message and transmitted by the service control unit, or the content upload request message transmitted on the E1 interface is the SIP REFER message, and is converted to the SIP INVITE message and transmitted by the service control unit, or the service control unit may add or modify any one or more of the content upload request message indication information, the request initiating party information, the content transmitting party information, the content transmitting party control information, and the content receiving party information on basis of the content upload request message received on the E1 interface.

In this step, further, after receiving the content upload request message, the content transmitting unit authenticates the content upload request message according to a local policy and/or message content, and transmits a content upload request message response message after the content upload request message passes the authentication. The authentication may be automatically processed by the content transmitting unit, or may also be processed through human-machine interaction. The authentication mode may be at least one of the following.

Mode 1: A content requesting party identifier is authenticated, for example, when the content requesting party is a network, or the content requesting party identifier is the same as a content transmitting party identifier, or the content requesting party identifier is the same as a preset content requesting party identifier, the message passes the authentication.

Mode 2: Validity of the content upload request message is authenticated, for example, when the device of the content transmitting unit device establishes a session with a device of the content requesting unit, and the content upload request message carries an identifier of the session, the message passes the authentication.

Mode 3: Whether the content upload request message is authenticated by the network is authenticated, for example, when the content transmitting unit receives the content upload request message from the service control unit through the E3 interface, and the service control unit authenticates the content upload request message, the content transmitting unit determines that the received content upload request message carries network authentication indication information, and the message passes the authentication.

When the content upload request message passes through the service control unit, the service control unit may also authenticate the content upload request message similarly, and the details will not be described again here.

Afterwards, further, according to the local policy or the content transmitting party control information in the content transmitting request message, the content transmitting unit may perform content transmission control, for example, start a camera, give an automatic answer, and determine a starting condition of the content transmission, so as to automatically control the device.

The content upload request message response message may be the HTTP message, the SIP INVITE message, or an SIP response code message, and the content upload request message response message may carry the content upload request message indication information.

The content upload session may be established in the following modes.

Mode 1: The content transmitting unit initiates a content upload session establishing request to the service control unit.

In this mode, after receiving the content upload request message from the content requesting unit through the E2 interface, or after receiving the content upload request message from the service control unit through the E3 interface, the content transmitting unit initiates the content upload session establishing request to the service control unit through the E3 interface, in which the content upload session establishing request carries the content upload request message indication information.

After processing the content upload session establishing request, the service control unit transmits a content upload session establishing response message, so as to establish the content upload session.

The content upload session establishing request may be located in the content upload request message response message, that is, the content upload session establishing request message and the content upload request message response message are the same message.

Mode 2: The content transmitting unit receives a content upload session establishing request from the service control unit.

In this mode, after receiving the content upload request message from the content requesting unit through the E1 interface, the service control unit initiates the content upload session establishing request to the content transmitting unit. Here, the content upload session establishing request is located in the content upload request message transmitted by the service control unit to the content transmitting unit, that is, the content upload request message transmitted by the service control unit to the content transmitting unit and the content upload session establishing request are the same message; alternatively, after receiving the content upload request message from the content requesting unit through the E1 interface, the service control unit transmits the content upload request message to the content transmitting unit through the E3 interface, and after receiving the content upload request message response message transmitted by the content transmitting unit through the E3 interface, the service control unit initiates the content upload session establishing request to the content transmitting unit through the E3 interface.

In this mode, after processing the content upload session establishing request, the content transmitting unit transmits the content upload session establishing response message, so as to establish the content upload session.

No matter which mode is adopted, the content upload session establishing request message or the content upload session establishing response message interacted between the content transmitting unit and the service control unit may further carry at least one of: the content upload request message indication information, the content transmitting party information, and the content receiving party information.

Step 3: The content transmitting unit establishes a media channel with a content receiving unit, and processes the real-time media content upload service.

After the content transmitting unit establishes the content upload session, according to the request type in the content upload request message indication message or a service processing logic of the service control unit, and under the control of the service control unit control, the content transmitting unit establishes the media channel with the content storage unit or the content viewing unit, and transmits the real-time media content to the content storage unit or the content viewing unit through the established media channel. Here, the content storage unit and the content viewing unit are referred to as the content receiving unit. At this time, an RTSP message may be further transmitted or received through an M1 or an M3 interface, so as to implement the play request and/or the storage request, that is, the content upload request message indication information may also be carried in the RTSP message, for example, by using a PLAY method or a RECORD method in the RTSP.

For example, if the request type is the storage type, the real-time media content is transmitted to the content storage unit. If the request type is the play type, the real-time media type is transmitted to the content viewing unit. Alternatively, according to the processing logic of the service control unit, the real-time media type may be firstly transmitted to the content storage unit, and then is forwarded to the content viewing unit by the content storage unit. If the request type is the storage and play type, the same real-time media content is transmitted, and the content storage unit stores the received media content. It should be noted that storing the real-time media content in the content storage unit is an independent service, and the user may view the media content stored on the network side. The details are described in detail in the following.

### I. The content transmitting unit transmits the real-time media content to the content storage unit.

When the service control unit establishes the content upload session with the content transmitting unit, the service control unit controls the content storage unit through the E4 interface to establish the media channel with the content transmitting unit. The content transmitting unit transmits the real-time media content to the content storage unit through the established media channel. The content storage unit and the content transmitting unit perform media negotiation and establish the media channel according to the existing standard.

### II. The content transmitting unit transmits the real-time media content to the content viewing unit.

Under the situation, the service control unit needs to establish a media content play session with the content viewing unit, and the service control unit controls the content viewing unit through an E5 interface to establish the media channel with the content transmitting unit. Then, the content transmitting unit transmits the real-time media content to the content viewing unit through the established media channel. The content viewing unit and the content transmitting unit perform the media negotiation and establish the media channel according to the existing standard.

The service control unit may establish the media content play session with the content viewing unit in the following two modes.

Mode 1: The content viewing unit initiates a media content play session establishing request to the service control unit.

In this mode, the content viewing unit initiates the media content play session establishing request to the service control unit through the E5 interface, and the service control unit processes the media content play session establishing request, and transmits a media content play session establishing response to the content viewing unit, so as to establish the media content play session.

Mode 2: The content viewing unit receives the media content play session establishing request from the service control unit.

In this mode, the service control unit initiates the media content play session establishing request to the content viewing unit through the E5 interface, and the content viewing unit processes the media content play session establishing request, and transmits a media content play session establishing response to the service control unit, so as to establish the media content play session.

The media content play session establishing request may be the SIP INVITE message or the SIP REFER message.

### III. The content transmitting unit transmits the real-time media content to the content storage unit, and the content storage unit forwards the real-time media content to the content viewing unit. When the request type is the storage and play type, the content storage unit stores the received media content.

Under the situation, the content transmitting unit firstly transmits the real-time media content to the content storage unit, and the details are as described in "I".

Then, the service control unit establishes the media content play session with the content viewing unit, and the details are as described in "II". When establishing the media content play session, the service control unit controls the content storage unit through the E4 interface to establish the media channel with the content viewing unit, and controls the content storage unit to transmit the real-time media content to the content viewing unit through the established media channel, and the content viewing unit receives and plays the media content.

The media content transmitted on the M1 interface and that transmitted on the M2 interface may be inconsistent, for example, the content storage unit performs a media encoding and decoding conversion on the media content.

The interaction process among the function units in the procedure for uploading the real-time media content is introduced in detail, thereby implementing the real-time media content upload service in the IMS network. In the following, technical solutions of the present invention are further described with reference to specific application scenarios.

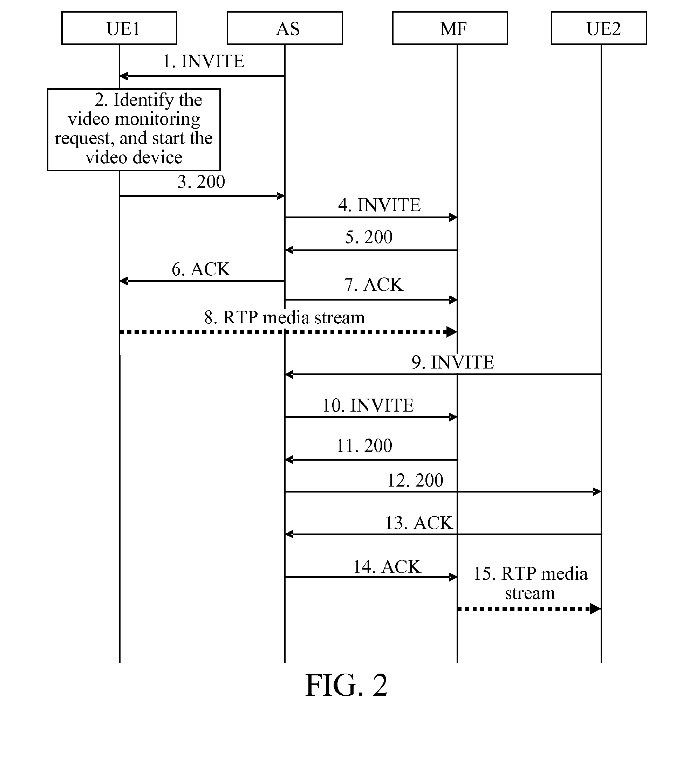

Referring to FIG. 2, in this embodiment, a content requesting unit and a service control unit are an AS, a content transmitting unit is a UE1, a content storage unit is an MF, and a content viewing unit is a UE2. The AS requests to perform video monitoring from the UE1, the UE1 automatically starts a video device and uploads real-time video, the MF stores the real-time video content, and the UE2 requests to view the real-time video. A specific process is described in the following.
1. The AS initiates a content upload request message, transmits an SIP INVITE message to the UE1, and requests to start the video monitoring.
   The INVITE message carries content upload request message indication information, preferably, the indication may be located in a message header or a message body, and may be a service identifier or a pre-generated label, for example, a label generated during subscription or registration. The content upload request message is also a content upload session establishing request message, and the INVITE message may further include content transmitting party control information.
2. The UE1 receives the SIP INVITE message, and identifies the content upload request message indication information. If the INVITE message further carries the content transmitting party control information, the UE1 may also automatically start the video device or automatically give an answer according to the information; if the INVITE message does not carry the content transmitting party control information, a manual answer may be performed, and the UE1 transmits a content upload request message response message SIP 200 message. The content upload request message response message is also a content upload session establishing request response, and the UE1 establishes a content upload session with the AS.
   Preferably, after receiving the INVITE message, the UE1 may further authenticate the content upload request message. For example, if the content upload request message indication is a pre-generated label and the UE1 identifies that the label is the same as a pre-acquired label, the message passes the authentication, and the UE1 performs subsequent processing, that is, the content upload request message indication is a network authentication indication.
3. The AS receives the content upload request message response message SIP 200 message.
4. The AS transmits a media content upload session establishing request message SIP INVITE message to the MF, so as to request to receive and store the real-time media stream content.
   The media content upload session establishing request message carries media content upload request message indication information, and the indication information also carries media content storage indication information, and carries a content storage path, a storage format, and a file identifier.
5. The MF receives the media content upload session establishing request message SIP INVITE message, identifies that the media content needs to be received and stored, applies for relevant media resources, for example, a storage space and a media receiving port, and transmits the media content upload session establishing response message SIP 200 message to the AS.
6. The AS transmits an acknowledgement message SIP ACK message to the UE1.
7. The AS transmits the acknowledgement message SIP ACK message to the MF.
8. The UE1 starts to upload the real-time media content, and the MF receives and stores the media content.
9. The UE2 transmits a media content play session establishing request message SIP INVITE message to the AS, so as to request to view the video monitoring of the UE1.
   The media content play session establishing request message carries media content play request indication information, and also carries identifier information about the content transmitting party UE1.
10. The AS receives the SIP INVITE message of the UE2, and identifies that the SIP INVITE message is the media content play request message and that the request content transmitting party is the UE1. The AS determines that the media content upload session of the UE1 is established, and that the UE1 is uploading the media content to the content storage unit MF, so the AS transmits the media content play session establishing request message SIP INVITE message to the MF. The media content play session establishing request message carries media content play indication information, and carries a media content transmitting party UE1 identifier and a corresponding media content upload session identifier.
11. The MF receives the SIP INVITE message of the AS, identifies that the SIP INVITE message is the media content play session establishing request message, and corresponds to a receiving media stream according to the content transmitting party identifier and the media content upload session identifier carried in the message. The MF applies for the media resources, for example, a media transmitting port, and associates the media resources with the corresponding receiving media stream, so as to prepare to forward the media stream. The MF transmits a media content play session establishing response message SIP 200 message.
12. The AS receives the SIP 200 message of the MF, identifies that the SIP 200 message is the media content play session establishing response message, and transmits the media content play session establishing response message SIP 200 message to the UE2.
13. The UE2 receives the media content play session establishing response message SIP 200 message, and transmits an acknowledgement message SIP ACK message.
14. The AS receives the acknowledgement message SIP ACK message of the UE2, and transmits the acknowledgement message SIP ACK message to the MF.
15. The MF starts to transmit the media content to the UE2, the media content is from the media content uploaded by the UE1 to the MF, and the UE2 receives and plays the media content.

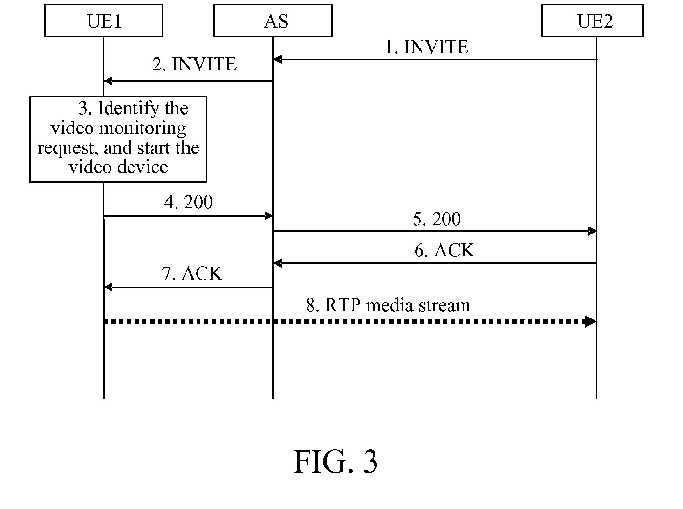

Referring to FIG. 3, in this embodiment, a UE2 is a content requesting unit and a content viewing unit, an AS is a service control unit, and a UE1 is a content transmitting unit. The UE2 initiates a request to view a real-time media content of the UE1.
1. The UE2 transmits a content upload request message SIP INVITE message to the AS, so as to request to view video monitoring of the UE1. The content upload request message carries content upload request message indication information, carries content transmitting party information about a content transmitting unit UE1 identifier and content receiving party information about a content viewing unit UE2 identifier, and carries request type indication information indicating the play request type. Preferably, the content upload request message indication is located in a Request-URI, a header, or a message body of the SIP message.
   The content upload request message is also a media content play session establishing request message, so as to request the UE1 to upload the media content, and request to play the media content on the UE2 at the same time.
2. The AS processes the content upload request message and the media content play session establishing request of the UE2, after the message and the request pass the authentication, for example, the AS determines whether the UE2 has the right to view the media content uploaded by the UE1, the AS further transmits the content upload request message to the UE1. The message carries the content upload request message indication information, and carries the content receiving party information about a content viewing unit UE2 identifier and content transmitting party control information, so as to control the content transmitting party to automatically start a camera device and automatically give an answer.
   The content upload request message is also a content upload session establishing request message.
3. The UE1 receives the SIP INVITE message, identifies that the SIP INVITE message is the content upload request message and the content upload session establishing request message, automatically starts the video device such as the camera and automatically gives the answer according to the content transmitting party control information in the message, and transmits a content upload request message response message SIP 200 message to the AS. The response message is also a content upload session establishing request response message, so as to establish the content upload session between the UE1 and the AS.
4. The AS receives the content upload request message response message SIP 200 message of the UE1, and transmits the content upload request message response message SIP 200 message to the UE2.
5. The UE2 receives the content upload request message response message, prepares to receive the media content, and transmits an acknowledgement message SIP ACK message to the AS.
6. The AS receives the acknowledgement message SIP ACK message of the UE2, and transmits the acknowledgement message SIP ACK message to the UE1.
7. The UE1 receives the acknowledgement message SIP ACK message, and starts to transmit the media content.
8. The media content is transmitted from the UE1 to the UE2, and is played and output on the UE2.

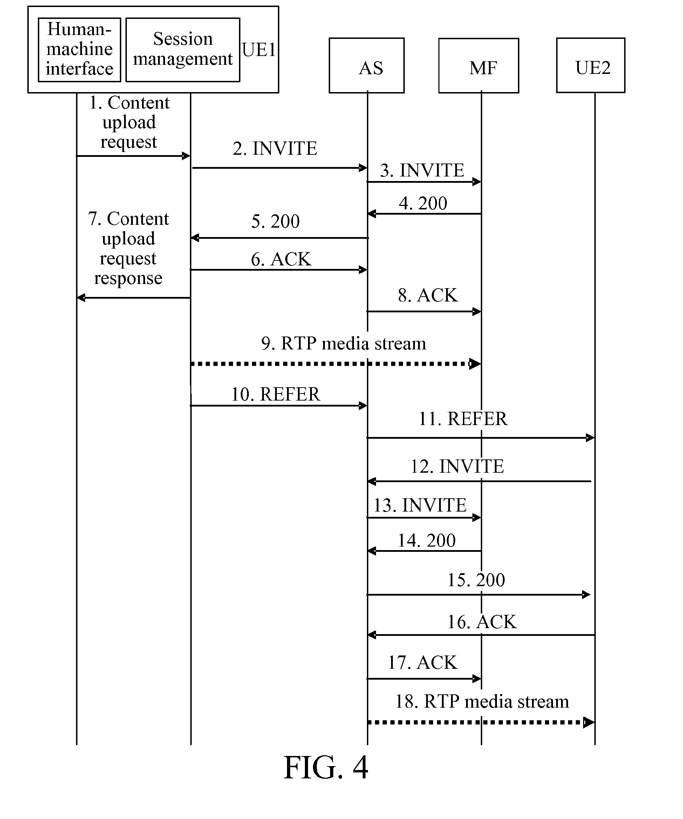

Referring to FIG. 4, in this embodiment, a UE1 is a content requesting unit and a content transmitting unit, an MF is a content storage unit, an AS is a service control unit, and a UE2 is a content viewing unit. The UE1 requests to transmit media content, saves the media content in the MF, and invites the UE2 to view the media content.
1. In the UE1, the content requesting unit transmits a content upload request message to the content transmitting unit. For example, the content requesting unit is a human-machine interface module, and the content transmitting unit is a session management module. The human-machine interface module receives an input of a user, and transmits the content upload request message to the session management module. The content upload request message is a UE1 internal message.
2. In the UE1, the content transmitting unit receives the content upload request message, and further transmits the content upload request message SIP INVITE message to the AS. The message carries a content upload request message indication, and carries a request type indication for indicating the storage request type.
   The content upload request message is also a content upload session establishing request message.
   Preferably, the content upload request message indication is located in a Request-URI, a header, or a message body of the SIP message.
3. The AS receives the content upload request message SIP INVITE message of the UE1, identifies that the request type is the storage request type, and transmits the content upload session establishing request message SIP INVITE message to the MF. The message carries content upload request message indication information, and carries media content storage indication information, and a storage path, a storage format, and a file identifier of the media content.
4. The MF receives the content upload session establishing request message SIP INVITE message of the AS, and identifies that the message is the content upload request message indication and that the media content needs to be stored. The MF applies for MF resources, prepares to receive and store the uploaded media content, and transmits a content upload session establishing response message SIP 200 message to the AS.
5. The AS receives the content upload session establishing response message of the MF, and transmits a content upload request message response message SIP 200 message to the UE1.
6. The UE1 receives the content upload request message response message of the AS, transmits an acknowledgement message SIP ACK message to the AS, and starts to transmit the media content.
7. After receiving the content upload request message response message of the AS, the content transmitting unit in the UE1 transmits the response message to the content requesting unit, that is, the session management module transmits the content upload request message response message to the human-machine interface module.
8. The AS receives the acknowledgement message of the UE1, and transmits an acknowledgement message SIP ACK message to the MF.
9. The UE1 transmits the media content to the MF, and the MF stores the received media content.
10. The UE1 transmits a content viewing request message SIP REFER message. The message carries content receiving party information about a content viewing unit UE2 identifier, and carries content transmitting party information about a content transmitting unit UE1 identifier, so as to invite the UE2 to view the media content uploaded by the UE1.
11. The AS receives the content viewing request message SIP REFER message of the UE1, and further transmits the content viewing request message to the UE2, in which the message carries the content transmitting party information about the content transmitting unit UE 1 identifier.
12. The UE2 receives the content viewing request message, and transmits a media content play session establishing request message SIP INVITE message to the AS, in which the message carries a content play request indication, the content transmitting party information about the content transmitting unit UE1 identifier, and the content receiving party information about the content viewing unit UE2 identifier. The content play session establishing request message is transmitted through a human-machine interaction operation, that is, after the content viewing request message is manually responded, or after the content viewing unit automatically processes the content viewing request.
13. The AS receives the media content play session establishing request message of the UE2, identifies that the request content transmitting party is the UE1, and determines that the UE1 establishes the content upload session and starts to upload the media content to the MF. The AS transmits the media content play session establishing request message to the MF, in which the message carries the content receiving party information about the content viewing unit UE2 identifier, and carries the content transmitting party information about the content transmitting unit UE1 identifier, and a corresponding media content identifier or a media content upload session identifier.
14. The MF receives the media content play session establishing request message of the AS, applies for the required media resources, for example, a media content transmitting port, associates the media resources with the media content upload session and/or the media content identifier of the UE1, prepares to forward a corresponding media stream, and transmits a media content play session establishing response message SIP 200 message to the AS.
15. The AS receives the media content play session establishing response message of the MF, and transmits the media content play session establishing response message SIP 200 message to the UE2.
16. The UE2 receives the media content play session establishing response message of the AS, prepares to receive and play the media content, and transmits an acknowledgement message SIP ACK message to the AS.
17. The AS receives the acknowledgement message of the UE2, and transmits the acknowledgement message SIP ACK message to the MF.
18. The MF transmits the media content received from the UE1 to the UE2, and the UE2 receives and plays the media content.

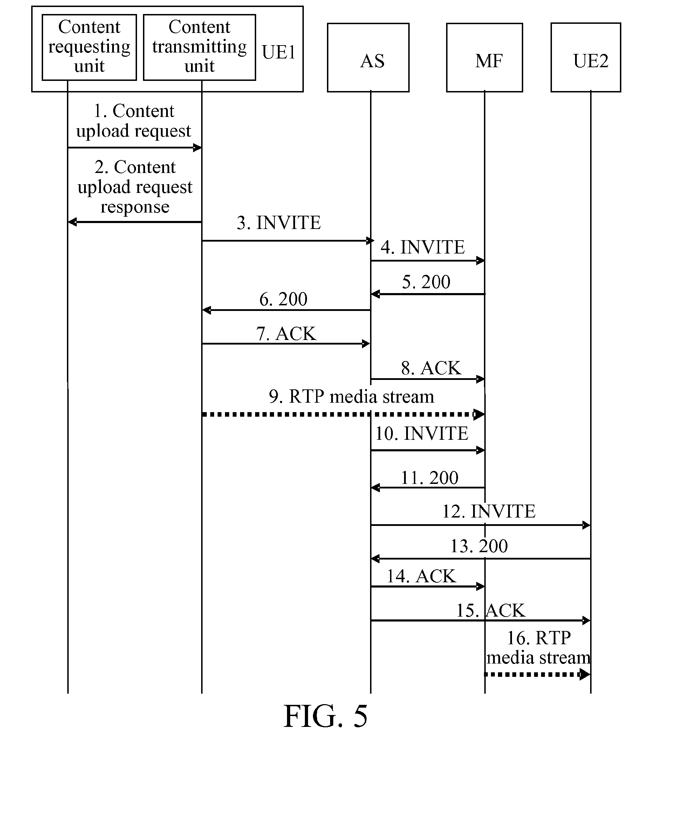

Referring to FIG. 5, in this embodiment, a UE1 is a content requesting unit and a content transmitting unit, an AS is a service control unit, an MF is a content storage unit, and a UE2 is a content viewing unit. The UE1 requests to transmit media content to the MF, and the AS invites the UE2 to view the media content.
1. In the UE1, the content requesting unit transmits a content upload request message to the content transmitting unit. For example, the content requesting unit is a human-machine interface module, and the content transmitting unit is a session management module. The human-machine interface module receives an input of a user, and transmits the content upload request message to the session management module. The content upload request message is a UE1 internal message.
2. In the UE1, the session management module transmits a content upload request message response message to the human-machine interface module.
3. The UE1 transmits a content upload session establishing request message SIP INVITE message to the AS. The message carries content upload indication information, and carries one or more pieces of content receiving party information, for example, content viewing unit UE2 identifier information and a request type indication for indicating the play request type, so as to request to upload the media content, and transmits the media content to UEs such as the UE2.
4. The AS transmits a media content upload session establishing request message SIP INVITE message to the MF. The message carries a media content upload request message indication and a request type being the media play request.
5. The MF receives the content upload session establishing request message SIP INVITE message transmitted by the AS, applies for MF resources, for example, a media receiving port, and transmits a content upload session establishing response message SIP 200 message to the AS.
6. The AS receives the content upload session establishing response message SIP 200 message of the MF, and transmits the content upload session establishing request response message SIP 200 message to the UE1.
7. The UE1 receives the content upload session establishing request response message SIP 200 message of the AS, and transmits an acknowledgement message SIP ACK message to the AS.
8. The AS receives the acknowledgement message SIP ACK message of the UE1, and transmits the acknowledgement message SIP ACK message to the MF.
9. The UE 1 transmits the media content to the MF, and the MF starts to receive the media content.
10. The AS determines that the media content uploaded by the UE1 needs to be played and output, according to the content receiving party information carried in the content upload session establishing request message transmitted by the UE1 in Step 3, or content viewing party information preset in the AS. In this embodiment, the UE2 exists because the content viewing unit needs to view the media content uploaded by the UE1. As the content viewing unit exists, the AS transmits a media content play session establishing request message SIP INVITE message to the MF, in which the message carries a content play request indication, and carries content transmitting party information about a content transmitting unit UE1 identifier, and/or an identifier of the content upload session established by the content transmitting unit UE or a corresponding media stream identifier.
11. The MF receives the media content play session establishing request message transmitted by the AS, applies for relevant media resources, for example, a media transmitting port, and associates the media resources with the media stream being uploaded by the UE1, so as to prepare to forward the media stream. The MF transmits a media content play session establishing response message SIP 200 message to the AS.
12. The AS receives the media content play session establishing response message of the MF, and transmits a media content play session establishing request message SIP INVITE message to the UE2. The message carries media content play indication information, and carries content viewing party control information, so as to indicate the UE2 to automatically give an answer, and automatically play the media.
13. The UE2 receives the media content play session establishing request message SIP INVITE message of the AS, prepares to receive and play the media content according to the content viewing party control information in the message, and transmits the media content play session establishing response message SIP 200 message.
14. The AS receives the media content play session establishing response message of the UE2, and transmits the acknowledgement message SIP ACK message to the MF.
15. The AS receives the acknowledgement message of the MF, and transmits the acknowledgement message SIP ACK message to the UE2.
16. The MF transmits the media content received from the UE1 to the UE2. The media content transmitted to the UE2 may be processed by the MF, for example, an encoding and decoding conversion may be performed.
17. If a plurality of content viewing units exists, the processing from Step 10 may be repeated, so as to establish the media content play sessions with the plurality of content viewing parties.

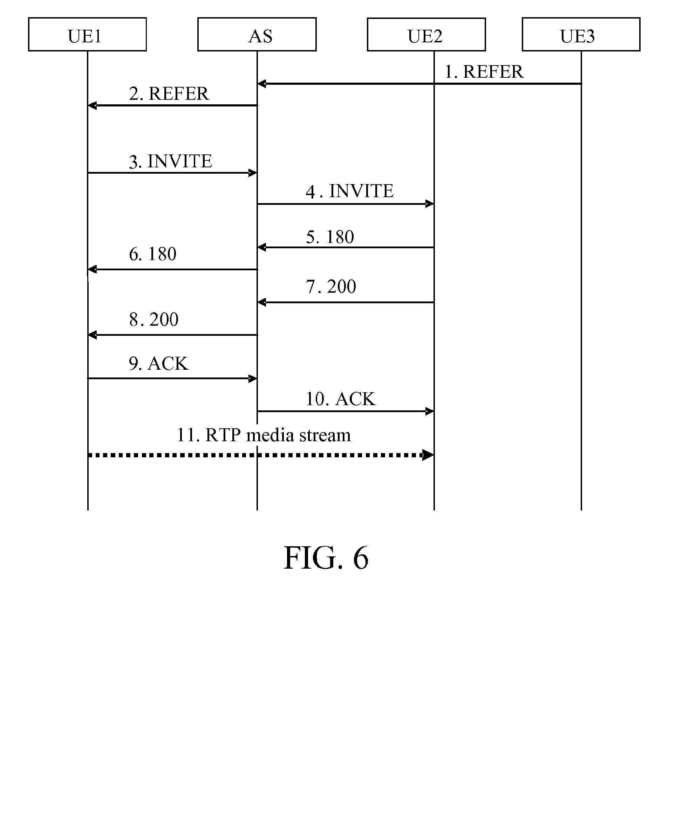

Referring to FIG. 6, in this embodiment, a UE3 is a content requesting unit, a UE1 is a content transmitting unit, a UE2 is a content viewing unit, and an AS is a service control unit. The UE3 requests the UE1 to transmit media content to the UE2.
1. The UE3 transmits a content upload request message SIP REFER message. The message carries a content upload request message indication, and carries request initiating party information about a content requesting unit UE3 identifier, content transmitting party information about a content transmitting unit UE1 identifier, content receiving party information about a content viewing unit UE2 identifier, so as to request the UE1 to transmit the media content to the UE2.
2. The AS receives the content upload request message SIP REFER message of the UE3, and authenticates the content upload request message, for example, authenticates whether the AS saves the correlation among the UE1, UE2, and UE3. After the message passes the authentication, the AS transmits the content upload request message SIP REFER message to the UE1, in which the message carries content upload request message indication information, and the content receiving party information about the content viewing unit UE2 identifier, and carries the content requesting unit UE3 identifier information.
3. The UE 1 receives the content upload request message SIP REFER message of the AS, and authenticates the message. For example, manual acknowledgement is performed through a human-machine interaction process, or the authentication is processed automatically, for example, the UE1 automatically determines whether the content requesting party and/or the content viewing party is within a locally set scope according to preset local data. After the message passes the authentication, the UE1 accepts the content upload request message SIP REFER message, and transmits a media content upload session establishing request message SIP INVITE message to the AS, in which the message carries the content upload request message indication, and the content receiving party information about the content viewing unit UE2 identifier.
4. The AS receives the media content upload session establishing request message SIP INVITE message of the UE1, transmits a media content play session establishing request message SIP INVITE message to the content receiving party, that is, the content viewing unit UE2, carried in the message.
5. The UE2 receives the media content play session establishing request message SIP INVITE message of the AS. The message may be processed manually or automatically, and in this embodiment, the message is processed manually. The UE2 indicates to a user that the content viewing request from the UE1 exists through a human-machine interface, waits for a manual answer, and transmits a temporary response message SIP 180 message to the AS.
6. The AS receives the temporary response message of the UE2, and transmits the temporary response message SIP 180 message to the UE1.
7. The UE2 answers the content viewing request, and transmits a media content play session establishing response message SIP 200 message to the AS.
8. The AS receives the media content play session establishing response message SIP 200 message of the UE2, and transmits a content upload session establishing response message SIP 200 message to the UE1.
9. The UE1 receives the content upload session establishing response message SIP 200 message of the AS, transmits an acknowledgement message SIP ACK message to the AS, and starts to transmit the media content.
10. The AS receives the acknowledgement message of the UE1, and transmits the acknowledgement message SIP ACK message to the UE2.
11. The UE1 transmits the media content to the UE2, and the UE2 receives, plays, and outputs the media content.

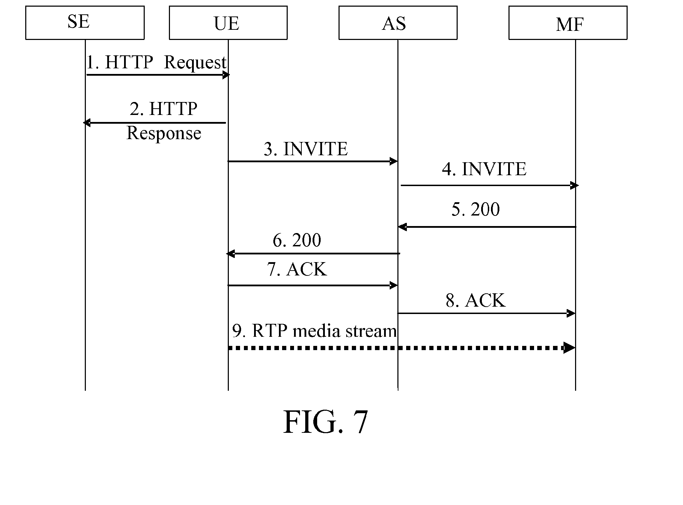

Referring to FIG. 7, in this embodiment, a sensor equipment (SE) is a content requesting unit, a UE is a content transmitting unit, an AS is a service control unit, and an MF is a content storage unit. The SE requests the UE to upload media content to the MF for storage.
1. The SE detects a specific event, for example, an abnormal intrusion, and transmits a content upload request message to the UE. In this embodiment, the content upload request message is an HTTP request message, and carries a content upload request message indication and a request type being a content storage type.
2. The UE receives the content upload request message, identifies that a request transmitting party is the set sensor, and transmits a content upload request message response message. In this embodiment, the content upload request message response message is the HTTP response message.
3. The UE transmits a content upload session establishing request message SIP INVITE message to the AS, in which the message carries content upload indication information, and carries the request type being the content storage type.
4. The AS transmits the media content upload session establishing request message SIP INVITE message to the content storage unit MF, in which the message carries a media content upload request message indication and the request type being the media storage request.
5. The MF receives the content upload session establishing request message SIP INVITE message transmitted by the AS, applies for MF resources, for example, a media receiving port and a media storage space, and transmits a content upload session establishing response message SIP 200 message to the AS.
6. The AS receives the content upload session establishing response message SIP 200 message of the MF, and transmits the content upload request message response message SIP 200 message to the UE.
7. The UE receives the content upload session establishing response message SIP 200 message of the AS, and transmits an acknowledgement message SIP ACK message to the AS.
8. The AS receives the acknowledgement message SIP ACK message of the UE, and transmits the acknowledgement message SIP ACK message to the MF.
9. The UE transmits the media content to the MF, and the MF starts to receive and save the media content.

In the embodiments, the procedure for establishing the media channel is not described in detail. The specific implementation is as described in relevant standards.

During the procedure for establishing the content upload session, the content upload session request message and the content upload request message or the content upload request response message are the same message, or may also be different messages.

As described in the embodiments, the real-time media content is uploaded in the IMS network according to the technical solutions. When the real-time media content is uploaded, the content upload request message may be automatically triggered under a certain condition, so as to implement the automatic processing during the whole process for uploading the real-time media content. In the content upload request message, the content viewing party may be designated, and the automatic playing of the content viewing party is implemented according to the control information of the content viewing party.

In an embodiment, the present invention further provides a device for transmitting real-time media content in an IMS device, which includes a content upload request message receiving module, a content upload session establishing module, a media channel establishing module, and a real-time media content transmitting module.

The content upload request message receiving module is adapted to receive a content upload request message carrying content upload request message indication information, and notify other modules to process a real-time media content upload service according to the received content upload request message.

The content upload session establishing module is adapted to establish a content upload session with a service control unit according to the content upload request message received by the content upload request message receiving module.

The media channel establishing module is adapted to establish a media channel with a media content receiving party, in which the media content receiving party may be an MF or an MRFP on a network side, or a content viewing unit, for example, a UE.

The real-time media content transmitting module is adapted to transmit the real-time media content through the established media channel.

Further, the device may include a content upload request message authenticating module, adapted to authenticate the content upload request message.

Further, the device may include a control information processing module, adapted to control a device for transmitting the real-time media content according to transmitting party control information in the content upload request message indication information, for example, control the device for transmitting the real-time media content to start a camera, control a position of the camera, control the device for transmitting the real-time media content to automatically give an answer, and control a starting condition (for example, time) of the device for transmitting the real-time media content.

In an embodiment, the present invention further provides a device for controlling a real-time media content upload service in an IMS network, which includes a content upload request message receiving processing module, a content upload session establishing processing module, and a media channel establishing processing module.

The content upload request message receiving processing module is adapted to receive a content upload request message carrying content upload request message indication information, and notify other modules to perform corresponding processing according to the content upload request message indication information.

The content upload session establishing processing module is adapted to establish a content upload session with a real-time media content transmitting party, in which the content transmitting party is a terminal of the IMS network.

The media channel establishing processing module is adapted to control the real-time media content transmitting party to establish a media channel with a media content receiving party, in which the media content receiving party may be an MF or an MRFP on a network side, or a content viewing unit, for example, a UE.

Further, the device includes a content upload request message authenticating processing module, adapted to authenticate the content upload request message.

Further, the device includes a content play session establishing processing module, adapted to establish a content play session with the content viewing unit.

Further, the device is an AS or a CSCF.

The operation of the modules and cells involved in the process are as described in the above embodiments, for example, as described in the authentication on the content upload request message, which will not be described again here.

Finally, it should be noted that the above embodiments are merely provided for describing the technical solutions of the present invention, but not intended to limit the present invention. Other physical combinations of the unit are also feasible, and the service process is unnecessarily consistent with the embodiments. Although the present invention has been described in detail with reference to the foregoing embodiments, it is apparent that those skilled in the art can make various modifications and variations to the invention without departing from the spirit and scope of the invention. The invention shall cover the modifications and variations provided that they fall in the scope of protection defined by the following claims or their equivalents.

## Claims

1. A method for uploading real-time media content in an Internet Protocol, IP, multimedia subsystem, IMS, network, comprising:
receiving, by a content transmitting unit, a content upload request message, wherein the content upload request message carries content upload request message indication information; and
establishing, by the content transmitting unit, a content upload session with a service control unit according to the received content upload request message, establishing a media channel with a content receiving unit, and transmitting the real-time media content through the media channel, wherein the content transmitting unit is a terminal of the IMS network, the content receiving unit is a terminal of the IMS network or a media function, MF, and the service control unit is a call session control function, CSCF, or an application server, AS.

2. The method according to claim 1, wherein the content upload request message indication information is located in a header or a message body of the message, and the content upload request message indication information is a service identifier or a pre-generated label.

3. The method according to claim 1, wherein the content upload request message indication information further comprises a request type, and the request type comprises a play request, a storage request, and a play and storage request.

4. The method according to claim 1, wherein the content upload request message further carries content receiving party information, and the content receiving party information comprises content viewing party identifier information and/or content storage party identifier information.

5. The method according to claim 1, wherein the content upload request message further carries content transmitting party control information, comprising at least one of:
controlling a device of the content transmitting unit to start a camera, controlling a position of the camera, controlling the device of the content transmitting unit to automatically give an answer, and a starting condition of the content transmitting unit.

6. The method according to claim 1, wherein after receiving the content upload request message, the content transmitting unit authenticates the content upload request message in at least one mode of:
mode 1: authenticating a content requesting party identifier;
mode 2: authenticating validity of the content upload request message; and
mode 3: authenticating whether the content upload request message is authenticated by the network.

7. The method according to claim 6, wherein the authenticating of a content requesting party identifier is passed when a content requesting party is a network, or the content requesting party identifier is the same as a content transmitting party identifier, or the content requesting party identifier is the same as a preset content requesting party identifier.

8. A device for transmitting real-time media content in an Internet Protocol, IP, multimedia subsystem, IMS, network, comprising:
a content upload request message receiving module, adapted to receive a content upload request message, wherein the content upload request message carries content upload request message indication information;
a content upload session establishing module, adapted to establish a content upload session with a service control unit according to the content upload request message received by the content upload request message receiving module;
a media channel establishing module, adapted to establish a media channel with a media content receiving party; and
a real-time media content transmitting module, adapted to transmit the real-time media content through the established media channel.

9. The device according to claim 8, further comprising a content upload request message authenticating module, adapted to authenticate the content upload request message.

10. The device according to claim 8 or 9, further comprising a control information processing module, adapted to perform control according to transmitting party control information in the content upload request message indication information.

11. A device for controlling a real-time media content upload service in an Internet Protocol, IP, multimedia subsystem, IMS, network, comprising:
a content upload request message receiving processing module, adapted to receive a content upload request message, wherein the content upload request message carries content upload request message indication information;
a content upload session establishing processing module, adapted to establish a content upload session with a real-time media content transmitting party according to the content upload request message received by the content upload request message receiving processing module, wherein the content transmitting party is a terminal of the IMS network; and
a media channel establishing processing module, adapted to control the real-time media content transmitting party to establish a media channel with a media content receiving party.

12. The device according to claim 11, further comprising:
a content upload request message authenticating processing module, adapted to authenticate the content upload request message.

13. The device according to claim 11 or 12, further comprising:
a content play session establishing processing module, adapted to establish a content play session with a content viewing unit.

14. The device according to claim 11, wherein the device is an application server, AS, or a call session control function, CSCF.
